Europäisches Patentamt

European Patent Office

Office européen des brevets

(19)

(11) Publication number: **0 057 775**
**B1**

(12)                    **EUROPEAN PATENT SPECIFICATION**

(45) Date of publication of patent specification: **16.04.86**

(51) Int. Cl.⁴: **A 47 J 36/10, A 47 J 37/12**

(21) Application number: **81200155.0**

(22) Date of filing: **09.02.81**

(54) Cooking appliance with detachable lid.

(43) Date of publication of application:
**18.08.82 Bulletin 82/33**

(45) Publication of the grant of the patent:
**16.04.86 Bulletin 86/16**

(84) Designated Contracting States:
**DE FR GB NL**

(56) References cited:
**CH-A- 276 368
DE-C- 896 409
FR-A- 625 075
FR-A- 757 093
FR-A- 801 212
GB-A- 610 605
GB-A- 618 765
US-A-1 766 366
US-A-2 263 180
US-A-3 065 855
US-A-3 463 077**

(73) Proprietor: **ITT INDUSTRIES BELGIUM
Société Anonyme
Avenue Louise 489
B-1050 Bruxelles (BE)**
(84) **NL**

(73) Proprietor: **Deutsche ITT Industries GmbH
Hans-Bunte-Strasse 19 Postfach 840
D-7800 Freiburg (DE)**
(84) **DE**

(73) Proprietor: **ITT INDUSTRIES INC.
320 Park Avenue
New York, NY 10022 (US)**
(84) **FR GB**

(72) Inventor: **Vrydags, André Pierre Joseph
Montage de Buren 15
B-4000 Liège (BE)**

(74) Representative: **Rosenoer, Jacques
BELL TELEPHONE MANUFACTURING
COMPANY S.A. Dépt.des Brevets Francis
Wellesplein 1
B-2000 Anvers (BE)**

Courier Press, Leamington Spa, England.

## Description

The invention relates to a container with detachable lid integral with a two-part outside handle such that both a fixed part of the handle and a movable part of the handle may be clutched by one hand, the movable part including integral projections acting on two levers mounted on the inside of the lid and able to latch it onto the container in two distinct places under the action of a restoring spring, while a displacement of the movable part towards the fixed part enables the lid to be unlatched.

Such a container with a detachable lid is already known from the US Patent No. 1766366 disclosing the cover of a garbage or like can. While such an independent cover can thus be completely and easily removed from the garbage can by using one hand which squeezes the movable part of the handle towards its fixed part to unlatch and lift the cover, the two parts of the handle project substantially above the outside surface of the cover while the inside mechanism with the two levers projects some distance inside the cover, the displacement of the parts generally occurring in a vertical plane. For some applications, it may be undesirable to have such a space reserved for such a function both on top and under the cover of the container. In particular there is also a need for such detachable lids, easily grasped and detached from or attached to a cooking appliance with one hand. Such an independent lid may for instance have to be completely removed from the vessel in the case of domestic deep fryers of relatively small size contrary to some of the larger and more expensive appliances where the lid is hinged on the vat. But it should nevertheless be securely fixed thereon during a frying operation. While it is already known from the French Patent No. 801212 to have a lid used to close the top opening of an open drum housing the actual deep fryer vat, latching is obtained in two diametrically opposed spots by two resilient members integral with the lid and which can be hooked on the vessel. This implies that resorting to one hand only, as in the case of the US Patent No. 1766366, is not possible, at least when detaching the lid.

An object of the invention is therefore to use a mechanism of the general type disclosed by the US Patent No. 1766366 but in such a way that a substantially flat lid can be used to cover a cooking appliance such as a deep fryer, not only the height of the latching mechanism inside the lid being reduced but the handle being also such as to take little vertical space above the lid. In this way, one facilitates the storage of such a small deep fryer appliance and additionally such design may be conducive to the lid handle being forcedly grasped in such a way as to avoid the hand being in contact with hot fumes evacuated through an odour filter occupying a major surface of the lid despite the presence of the handle and its associated mechanism.

In accordance with the first characteristic of the invention, the container is a cooking appliance, the displacement of the levers occurs in a plane parallel to that of the lid and the displacement of the movable part of the handle takes place in a direction parallel to said plane.

In this way, while little additional space is taken by the handle above the lid and by the mechanism under the lid, the handle may be readily squeezed between the thumb and other fingers, particularly when unlatching the lid from the cooking vessel.

It should be noted that other forms of lids with a handle in order to latch them on a cooking utensil are already known, e.g. German Patent No. 896409 and French Patent No. 757093. However, with such pressure cooker covers, the latching means are no longer on the inside of the cover as in the case of the US Patent No. 1766366 and additionally, such handles do not enable a squeezing action nor do they take as little vertical space as disclosed by the newly proposed solution.

In accordance with a second characteristic of the invention, for such a container with detachable lid, said handle parts are positioned next to the ends of said levers, each lever having two arms on either side of a respective pivot, the two arms making an obtuse angle with respect to each other, the levers occupying symmetrical positions with respect to said movable part and restoring spring, and said fixed part, movable part and restoring spring being positioned within part of the area generally defined by the two levers and the line joining their other ends which cooperate with the cooking appliance container to latch the lid thereon.

In this way, not only can the handle be squeezed between the four fingers and the thumb of one hand in a horizontal direction parallel to the main plane of a detachable deep fryer lid but the latching mechanism is so designed that sufficient space may be reserved in the lid to house a filter for the fumes generated by a cooking process. This is particularly desirable in domestic deep fryers of relatively small size and where such a filter will generally occupy a larger area of the lid, generally cutting across the line joining the two opposite latching places. At the same time, the displaceable handle will remain well outside the filter with the nature of the grip positively preventing the hand to be positioned on top of the openings in the lid through which the hot fumes escape after passing through the filter.

The objects and features of the invention mentioned above as well as others and the best manner to attain them shall be better understood from the following description of a detailed embodiment of the invention to be read in conjunction with the accompanying drawings in which:

Fig. 1 represents a plan view of the underside of the upper part of a deep fryer lid in accordance with the invention;

Fig. 2 represents a sectional side view along line A—A in Fig. 1 and passing mainly through the center line of the lid corresponding to the direction along which the lid handle is operated; and

Fig. 3 represents a front view of the deep fryer with the lid of Fig. 1 latched thereon and shown in a sectional view through the center line B—B of Fig. 1 passing longitudinally through the two levers and generally perpendicular to A—A.

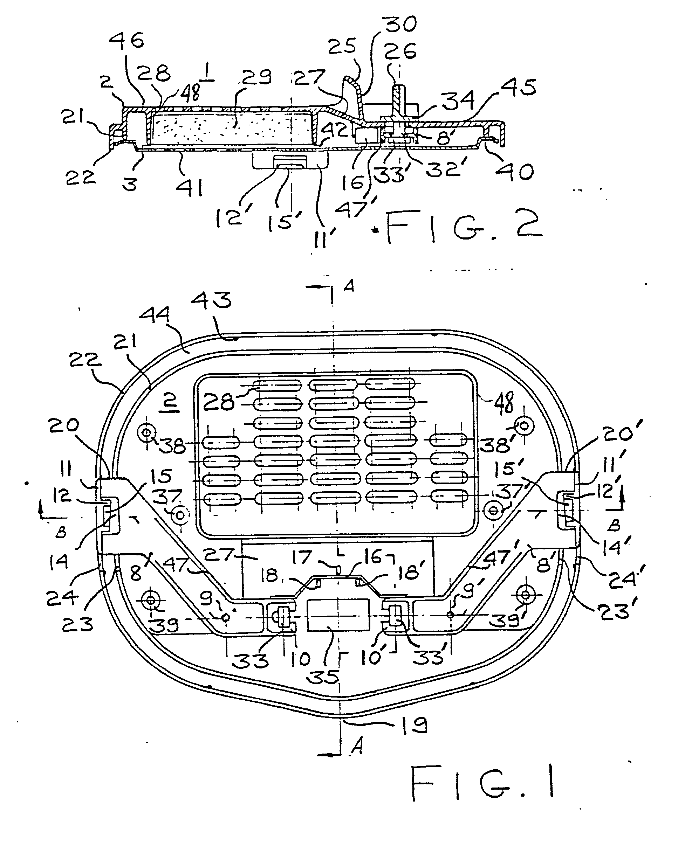

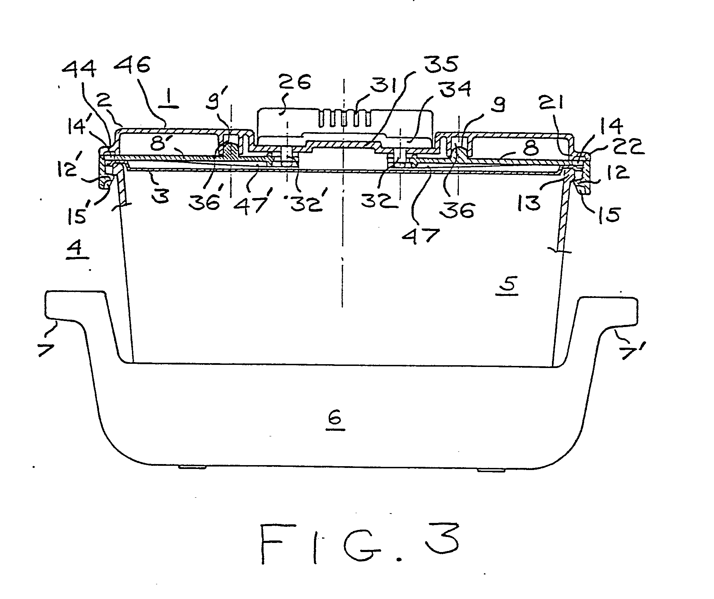

The assembled detachable lid 1 appears in Figs. 2 and 3 but in Fig. 1, only its upper part or upper lid 2 in plastic material (underside) is shown with the metal under lid 3 appearing in Figs. 2 and 3 removed to show the lever operating mechanism enabling the lid 1 to be latched on top of the deep fryer appliance 4 schematically represented only in Fig. 3. As shown therein, the metal vat 5 is housed in a base 6 of plastic material with two handles 7 and 7' at opposite ends, the general appearance of this small size domestic deep fryer being similar to that disclosed in the Benelux design registration N° 0717000.

Fig. 1 best shows the general principle of the latching mechanism which is essentially constituted by the symmetrically shaped and located levers 8 and 8' pivoted on the underside of the upper lid 2 by pivots 9 and 9' respectively. The short ends of the levers 8/8' have forked ends 10/10' while the long arms end in hook shaped parts 11/11', generally at right angles to the plane of Fig. 3 and enabling the lid 1 to be latched onto the appliance 4 as shown in Fig. 3.

Together with the views shown in Figs. 1 and 2, Fig. 3 indicates that the latching ends 11/11' of the long arms of the levers 8/8' extend downwardly to end in nose shaped parts 12/12' which, as shown in Fig. 3, can be hooked under the upper rim 13 of the vat 5 having an increased thickness. The openings 14/14' are needed in connection with the moulding of the levers 8/8'. Likewise, the recesses 15/15' at the bottom of the nose shaped parts 12/12' are designed to prevent an unduly increased thickness of material for such parts, this being undesirable for the moulding operation.

Acting on the outside of the forked ends 10/10' is the restoring flat spring 16 bent as shown in Fig. 1 and with its central leg perpendicular to the plane of the lid 1 squeezed between the central lug 17 and the two symmetrically located lugs 18/18', all three integral with the upper lid 2. The tolerance between the length of this central part 16 and the separation between the lugs 18 and 18' should preferably be reduced as much as possible to limit the amount of play of the spring 16 in order that its position be well determined and its action on the two forked ends of the levers 8/8' as symmetrical as possible.

In the position shown in Fig. 1, due to the action of the spring 16, the short arms of the levers 8/8' occupy a horizontal position, being pressed towards the pointed part 19 of the lid 1 until the edges 20/20' of the long arms of levers 8/8' abut against the inner and outer rims 21 and 22 of the upper lid 2. As shown in Fig. 1, these downturned rims are slotted at 23/23' and 24/24' to allow the latching ends 11/11' of the longer arms of the levers 8/8' to move out of the position shown in Fig. 1 so as to protrude outwardly in order to release the lid 1 from the position shown in Fig. 3 where the nose parts 12/12' are caught under the upper rim 13 of the vat 5.

This outward displacement of the outer ends of the long arms of levers 8/8' will be obtained upon the user gripping the two parts 25 and 26 of the handle. The fixed part 25 appears in side elevation on Fig. 2 and it is shown to help create a cavity between the lower sloping part 27 provided in the upper lid 2, immediately near the openings such as 28 enabling the fumes to escape after passing through the filter here shown as a cartridge 29 of activated charcoal, and the upper sloping wall 30, variably inclined in the same direction as 27 but nearer to the vertical. This re-entrant cavity affords a convenient grip for the four fingers of the hand which remain caught under the curved upper wall 30 while the thumb can press on the right (Fig. 2) of the outside projecting member 26, and which is provided with a series of five grooves 31 (Fig. 3). As shown by Figs. 2 and 3, this displaceable part includes also a member projecting on the inside of the upper lid 2 and constituted by the lugs 32/32' which are terminated by parts 33/33' of increased rectangular cross section so that these lugs can be inserted and caught inside the forked ends 10/10' of the short arms of levers 8/8'. As shown by Fig. 2, the displaceable member 26 protruding on the outside of the upper lid 2 has an enlarged base 34, which as shown in Fig. 3 has a recess in its underside shaped to match a raised rectangular portion 35 in the upper lid 2 and seen as a rectangular recess in Fig. 1. Conveniently, the injection opening (not shown) for the moulding of the upper lid 2 can be provided within that area.

Thus, gripping the handle and pressing the two parts 25 and 26 together will result in the forked ends 10/10' of the levers 8/8' being pivoted (in the upper direction for Fig. 1) against the action of the restoring spring 16 which will be stretched out while the ends 11/11' of the longer arms of levers 8/8' will be moved outwardly to their unlatched positions.

As shown in Fig. 3, the pivots 9/9' are simply inserted into corresponding cylindrical cavities 36/36' provided under the upper lid 2. In this manner, the levers 8/8', the spring 16 and the displaceable operating handle 26, can be easily assembled and thereafter, with the filter cartridge 29 also positioned within the rectangular cavity defined by the rectangular rim 48 the assembly of the complete lid 1 may be terminated by fixing the metal under lid 3 to the upper lid 2 in plastic material with the help of screws. Posts such as 37/37' can be provided to this end with threaded holes. Additional or alternative like posts 38/38' and 39/39' can also be used.

As shown in Figs. 2 and 3, the metal lid 3 is dish shaped so that its rim 40 having the same contour as the upper lid 2 shown in Fig. 1, rests against the edge of its inner rim 21 with the concave side of rim 40 on the underside and positioned on top of the upper rim 13 of the vat 5 (Fig. 3). Holes 41 are provided in the metal lid 3 in the area of the filter cartridge 29 to enable the fumes to escape therethrough and with the lower rim 42 of the cartridge 29 fixed between the edge 48 of the rectangular cavity and the metal lid 3. Vertical ribs such as 43 shown in Fig. 1 can be used to secure predetermined contact points between the lower metal lid 3 and the upper lid 2 in plastic material.

Finally, it will also be appreciated from Fig. 2 that to the outer vertical rim 22 of the latter, corresponds a horizontal ledge 44 and that this borders the whole periphery of the upper lid 2 with a re-entrant enlarged area 45 housing the slidable handle 26. In this way, with the vertical inner rim 21 being extended to provide the raised part 46 of the upper lid 2 in order to have adequate height to lodge both the filter cartridge 29 and the levers 8/8' with their associated parts, the area 45 constitutes a recess for the slidable handle 26 which, like the cavity between inclined parts 25 and 27 facilitates handling. This may also be additionally enhanced by a partial balancing of the weight of the assembled lid, i.e. with the weight of the filter cartridge 29 being partly offset by that of the elements on the other side of the handle 25, including levers 8/8' for which reinforced vertical edges 47/47' are provided.

While the principles of the invention have been described above in connection with specific apparatus, it is to be clearly understood that this description is made only by way of example and not as a limitation on the scope of the invention which is defined by the appended claims.

## Claims

1. Container (4) with detachable lid (1) integral with a two-part outside handle such that both a fixed part (25) of the handle and a movable part (26) of the handle may be clutched by one hand, the movable part including integral projections (33/33') acting on two levers (8/8') mounted on the inside of the lid and able to latch it onto the container in two distinct places under the action of a restoring spring (16), while a displacement of the movable part towards the fixed part enables the lid to be unlatched, characterized in that the container (5) is a cooking appliance, that the displacement of the levers (8/8') occurs in a plane parallel to that of the lid (1) and that the displacement of the movable part (26) of the handle takes place in a direction parallel to said plane.

2. Container (4) with detachable lid (1) as claimed in claim 1, characterized in that said handle parts (25, 26) are positioned next to the ends (10/10') of said levers, each lever having two arms on either side of a respective pivot (9/9'), the two arms making an obtuse angle with respect to each other, the levers occupying symmetrical positions with respect to said movable part (26) and restoring spring (16), and said fixed part (25), movable part (26) and restoring spring (16) being positioned within part of the area generally defined by the two levers and the line joining their other ends (20/20') which cooperate with the cooking appliance container (5) to latch the lid (1) thereon.

3. Container (5) with detachable lid (1) as claimed in claim 1, characterized in that each of said levers (8/8') is provided with a forked end (10/10') to allow a respective lug to be hooked in cooperative engagement therewith, said lugs (32/32') being integral with said movable part (26).

4. Container (4) with detachable lid (1) as claimed in claim 2, characterized in that said lid (1) houses (48) a filter (29) for the fumes generated by a cooking process and which occupies part of the area defined by said levers (8/8') together with the line joining their said other ends (20/20').

5. Container (4) with detachable lid (1) as claimed in claim 4, characterized in that it includes an upper lid (2) of plastic material housing (48) said filter (29) and said levers (8/8'), bottom closure being ensured by a metal under lid (3) fixed to the upper lid.

6. Container (4) with detachable lid (1) as claimed in claim 2, characterized in that said movable part (26) projecting on the outside is able to slide relative to said lid towards and away from said fixed part (25), the latter part being inclined with respect to the lid to provide a cavity (27, 30), facilitating gripping of the movable part projecting on the outside of the lid and the fixed part between the thumb and the fingers of one hand.

## Patentansprüche

1. Gefäß (4) mit abnehmbahrem Deckel (1), an den ein zweiteiliger äußerer Griff so angeformt ist, daß sowohl ein feststehender Teil (25) des Griffes als auch ein beweglicher Teil (26) des Griffes mit einer Hand ergriffen werden können, wobei der feststehende Teil daran angeformte Vorsprünge (33/33') aufweist, die an zwei auf der Innenseite des Deckels befestigten Hebeln (8/8') angreifen, durch die der Deckel unter der Wirkung einer Rückstellfeder (18) an zwei definierten Stellen auf dem Gefäß verriegelt werden kann, während eine Verschiebung des beweglichen Teils zum feststehenden Teil hin eine Entriegelung des Deckels ermöglicht, dadurch gekennzeichnet, daß das Gefäß (5) ein Kochgerät ist, daß die Verschiebung der Hebel (8/8') in einer parallel zu der Ebene des Deckels (1) liegenden Ebene erfolgt, und daß die Verschiebung des beweglichen Teils (26) des Griffs in einer zu dieser Ebene parallelen Richtung erfolgt.

2. Gefäß (4) mit abnehmbarem Deckel (1) nach Anspruch 1, dadurch gekennzeichnet, daß die Griffteile (25, 26) im Bereich der Enden (10/10') der Hebel liegen, von denen jeder zu beiden Seiten eines Drehzapfens (9/9') zwei einen stumpfen Winkel bildende Hebelarme aufweist, wobei die Hebel in bezug auf den beweglichen Teil (26) und die Rückstellfeder (16) symmetrische Stellungen einnehmen und der feststehende Teil (25), der bewegliche Teil (26) und die Rückstellfeder (16) in einem Teil des Bereiches angeordnet sind, der allgemein durch die beiden Hebel und die Verbindungslinie zwischen deren anderen Enden (20/20') definiert ist, die mit dem Kochgerätgefäß (5) zur Verriegelung des Deckels (1) auf diesem zusammenwirken.

3. Gefäß (5) mit abnehmbarem Deckel (1) nach Anspruch 1, dadurch gekennzeichnet, daß jeder der Hebel (8/8') mit einem gabelförmigen Ende (10/10') versehen ist, in das jeweils eine an den beweglichen Teil (26) angeformte Nase (32/32') einrastbar ist.

4. Gefäß (4) mit abnehmbarem Deckel (1) nach Anspruch 2, dadurch gekennzeichnet, daß in dem Deckel (1) ein Filter (29) für die beim Kochvorgang entstehenden Dämpfe untergebracht ist (48), der einen Teil des von den Hebeln (8/8') und der Verbindungslinie zwischen den anderen Enden (20/20') der Hebel definierten Bereich einnimmt.

5. Gefäß (4) mit abnehmbarem Deckel (1) nach Anspruch 4, dadurch gekennzeichnet, daß es einen oberen Deckel (2) aus Kunststoff aufweist, in dem der Filter (29) und die Hebel (8/8') untergebracht sind (48), wobei der Abschluß nach unten durch einen an dem oberen Deckel befestigten Metall-Unterdeckel (3) gewährleistet ist.

6. Gefäß (4) mit abnehmbarem Deckel (1) nach Anspruch 2, dadurch gekennzeichnet, daß der nach außen hervorstehende bewegliche Teil (26) gegenüber dem Deckel zum feststehenden Teil (25) hin und von diesem weg verschiebbar ist, wobei der feststehende Teil (25) gegenüber dem Deckel geneigt ist, so daß eine Mulde (27, 30) gebildet ist, die das Greifen des nach außen überstehenden beweglichen Teils und des feststehenden Teils zwischen dem Daumen und den Fingern einer Hand erleichtert.

**Revendications**

1. Récipient (4) avec couvercle amovible (1) solidaire d'une poignée externe en deux parties telle que tant une partie fixe (25) de la poignée qu'une partie mobile de la poignée (26) peuvent être empoignées d'une main, la partie mobile comprenant des projections solidaires (33/33') agissant sur deux leviers (8/8') montés à l'intérieur du couvercle et capables de la verrouiller sur le récipient en deux endroits distincts sous l'action d'un ressort de rappel (16), tandis qu'un déplacement de la partie mobile vers la partie fixe permet au couvercle d'être déverrouillé, caractérisé en ce que le récipient (5) est un appareil de cuisson, en ce que le déplacement des leviers (8/8') se produit dans un plan parallèle à celui du couvercle (1) et en ce que le déplacement de la partie mobile (26) de la poignée prend place dans une direction parallèle audit plan.

2. Récipient (4) avec couvercle détachable (1) comme revendiqué à la revendication 1, caractérisé en ce que lesdites parties de poignée (25, 26) sont positionnées auprès des extrémités (10/10') dudit levier, chaque levier ayant deux bras de chaque côté d'un pivot respectif (9/9'), les deux bras faisant un angle obtus l'un par rapport à l'autre les leviers occupant des positions symétriques par rapport à ladite partie mobile (26) et audit ressort de rappel (16), et ladite partie fixe (25), ladite partie mobile (26) et ledit ressort de rappel (16) étant positionnés à l'intérieur d'une partie de la surface généralement définie par les deux leviers et la ligne joignant leurs autres extrémités (20/20') qui coopèrent avec le récipient (5) de l'appareil de cuisson pour vérrouiller le couvercle (1) sur celui-ci.

3. Récipient (5) avec couvercle détachable (1) comme revendiqué à la revendication 1, caractérisé en ce que chacun desdits leviers (8/8') est pourvu d'une extrémité fourchue (10/10') pour permettre à un têton respectif d'y être accroché en engagement coopérant, lesdits têtons (32/32') étant solidaires de ladite partie mobile (26).

4. Récipient (4) avec couvercle détachable (1) comme revendiqué à la revendication 2, caractérisé en ce qu'un filtre (29) pour les fumées générées par une opération de cuisson est logé (48) dans ledit couvercle (1) et qu'il occupe une partie de la surface définie par lesdits leviers (8/8') ensemble avec la ligne joignant leurs dites autres extrémités (20/20').

5. Récipient (4) avec couvercle détachable (1) comme revendiqué à la revendication 4, caractérisé en ce qu'il inclut un couvercle supérieur (2) en matière plastique dans lequel lesdits filtre (29) et leviers (8/8') sont logés (48), la fermeture inférieure étant assurée par un sous-couvercle (3) en métal fixé au couvercle supérieur.

6. Récipient (4) avec couvercle détachable (1) comme revendiqué à la revendication 2, caractérisé en ce que ladite partie mobile (26) se projetant vers l'extérieur peut glisser par rapport audit couvercle vers et à l'écart de ladite partie fixe (25), la dernière partie étant inclinée par rapport au couvercle pour fournir une cavité (27, 30) facilitant la prise de la partie mobile se projetant à l'extérieur du couvercle et de la partie fixe entre le pouce et les doigts d'une main.

FIG. 2

FIG. 1

FIG. 3